(19) **Europäisches Patentamt**
**European Patent Office**
**Office européen des brevets**

(11) **EP 4 770 167 A1**

(12) **EUROPÄISCHE PATENTANMELDUNG**
veröffentlicht nach Art. 153 Abs. 4 EPÜ

(43) Date of publication:
**01.07.2026 Bulletin 2026/27**

(21) Application number: **24856448.6**

(22) Date of filing: **20.08.2024**

(51) International Patent Classification (IPC):
*H04W 16/28* (2009.01)   *H04W 8/24* (2009.01)
*H04W 72/21* (2023.01)   *H04W 72/0446* (2023.01)
*H04W 72/1268* (2023.01)

(52) Cooperative Patent Classification (CPC):
**H04W 8/24; H04W 16/28; H04W 72/0446;**
**H04W 72/1268; H04W 72/21**

(86) International application number:
**PCT/JP2024/029455**

(87) International publication number:
**WO 2025/041760 (27.02.2025 Gazette 2025/09)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.08.2023 JP 2023134078**

(71) Applicant: **NTT DOCOMO, INC.**
**Tokyo 100-6150 (JP)**

(72) Inventors:
• **SHIBAIKE, Naoya**
  **Tokyo 100-6150 (JP)**
• **MATSUMURA, Yuki**
  **Tokyo 100-6150 (JP)**
• **NAGATA, Satoshi**
  **Tokyo 100-6150 (JP)**
• **WANG, Jing**
  **Beijing, 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes a control section that controls transmission of a non-codebook based uplink shared channel (PUSCH) using more than four layers and a sounding reference signal (SRS) for the PUSCH, and a transmitting section that transmits the PUSCH and the SRS. A maximum number of SRS resources capable of being simultaneously transmitted is determined based on at least one of a fixed value greater than four, a maximum number of layers for the PUSCH, or a number of symbols used for the SRS transmission.

*FeatureSetUplinkPerCC* information element

```
-- ASN1START
-- TAG-FEATURESETUPLINKPERCC-START

FeatureSetUplinkPerCC ::=                   SEQUENCE {
    supportedSubcarrierSpacingUL                SubcarrierSpacing,
    supportedBandwidthUL                        SupportedBandwidth,
    channelBW-90mhz                             ENUMERATED {supported}          OPTIONAL,
    mimo-CB-PUSCH                               SEQUENCE {
        maxNumberMIMO-LayersCB-PUSCH               MIMO-LayersUL
OPTIONAL,
        maxNumberSRS-ResourcePerSet                INTEGER (1..2)
    }                                                                           OPTIONAL,
    maxNumberMIMO-LayersNonCB-PUSCH             MIMO-LayersUL                   OPTIONAL,
    supportedModulationOrderUL                  ModulationOrder                 OPTIONAL
}

FeatureSetUplinkPerCC-v1540 ::=             SEQUENCE {
    mimo-NonCB-PUSCH                            SEQUENCE {
        maxNumberSRS-ResourcePerSet                INTEGER (1..4),
        maxNumberSimultaneousSRS-ResourceTx        INTEGER (        )  ──────▶   (1..8): OPTION 1-1-1
    } OPTIONAL                                                                   (1..X): OPTION 1-1-2
}
```

FIG.14

EP 4 770 167 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In 3GPP Rel. 15/16, a maximum number of UL layers is four, and a maximum number of sounding reference signal (SRS) ports is also four. Accordingly, UL transmission is implemented by a simple relationship between a layer and an uplink (UL) channel/signal (PUSCH/SRS) port.

For future radio communication systems (for example, 3GPP Rel. 18 or later versions), support of more than four layers in UL transmission (for example, a PUSCH/SRS corresponding to the PUSCH) from a terminal (user terminal, User Equipment (UE)) is under study. However, the UL transmission (for example, control of transmission of an SRS corresponding to a PUSCH, or the like) when UL transmission with more than four layers is supported is indefinite.

Thus, an object of the present disclosure is to provide a terminal, a radio communication method, and a base station that enable appropriate control of UL transmission even when UL transmission with more than four layers is supported.

Solution to Problem

A terminal according to one aspect of the present disclosure includes a control section that controls transmission of a non-codebook based uplink shared channel (PUSCH) using more than four layers and a sounding reference signal (SRS) for the PUSCH, and a transmitting section that transmits the PUSCH and the SRS. A maximum number of SRS resources capable of being simultaneously transmitted is determined based on at least one of a fixed value greater than four, a maximum number of layers for the PUSCH, or a number of symbols used for the SRS transmission.

Advantageous Effects of Invention

According to one aspect of the present disclosure, it is possible to appropriately control UL transmission even when UL transmission with more than four layers is supported.

Brief Description of Drawings

[FIG. 1] FIG. 1 shows an example of an SRS resource set configuration information element.

**EP 4 770 167 A1**

[FIG. 2] FIG. 2 shows an example of an SRS resource configuration information element.

[FIG. 3] FIG. 3 shows an example of a table indicating a relationship between the number $K_{TC}$ of transmission combs and a maximum number $n_{SRS}^{CS,max}$ of SRS cyclic shifts.

[FIG. 4] FIG. 4 shows an example of a table indicating the number $K_{TC}$ of transmission combs and an SRS cyclic shift value $n_{SRS}^{CS,i}$ in a case where the number $N_{ap}^{SRS}$ of SRS ports is 2.

[FIG. 5] FIG. 5 shows an example of a table indicating the number $K_{TC}$ of transmission combs and an SRS cyclic shift value $n_{SRS}^{CS,i}$ in a case where the number $N_{ap}^{SRS}$ of SRS ports is 4.

[FIG. 6] FIG. 6 shows an example of resource starting position $k_{TC}^{p\_i}$ in a frequency direction in a case where the number $N_{ap}^{SRS}$ of SRS ports is 2.

[FIG. 7] FIG. 7 shows an example of resource starting position $k_0^{p\_i}$ in a frequency direction in a case where the number $N_{ap}^{SRS}$ of SRS ports is 4.

[FIG. 8] FIG. 8 shows an example of SRS allocation to each port in a case where the number of transmission combs is 4.

[FIG. 9] FIG. 9 shows an example of SRS allocation to each port in a case where the number of transmission combs is 2.

[FIG. 10] FIG. 10 shows an example of port distribution using TDM.

[FIG. 11] FIG. 11 shows an example of 8-port SRSs to be TDMed.

[FIG. 12] FIG. 12A to FIG. 12C show examples of SRS repetition and intra-slot frequency hopping.

[FIG. 13] FIG. 13A and FIG. 13B show examples of option 1 of Embodiment A4.

[FIG. 14] FIG. 14 shows an example of configuration of SRS resources capable of being simultaneously transmitted according to Embodiment 1.

[FIG. 15] FIG. 15 is a diagram to show an example of a schematic structure of a radio communication system according to one embodiment.

[FIG. 16] FIG. 16 is a diagram to show an example of a structure of a base station according to one embodiment.

[FIG. 17] FIG. 17 is a diagram to show an example of a structure of a user terminal according to one embodiment.

[FIG. 18] FIG. 18 is a diagram to show an example of a hardware structure of the base station and the user terminal according to one embodiment.

[FIG. 19] FIG. 19 is a diagram to show an example of a vehicle according to one embodiment.

Description of Embodiments

(Control of Transmissions of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") or information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), or aperiodic CSI (Aperiodic SRS (A-SRS)). Note that the UE may periodically (or, after activation, periodically) transmit the P-SRS and the SP-SRS, and may transmit the A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook-based transmission, the UE may determine a precoder (precoding matrix) for the PUSCH transmission, based on an SRI, a transmitted rank indicator (TRI), and a transmitted precoding matrix indicator (TPMI). In a case of non-codebook-based transmission, the UE may determine a precoder for the PUSCH transmission, based on the SRI.

The SRS resource information may include an SRS resource ID (SRS-ResourceId), the number of SRS ports, an SRS port number, a transmission Comb, SRS resource mapping (for example, a time and/or frequency resource location, a resource offset, a resource periodicity, the number of repetitions, the number of SRS symbols, an SRS bandwidth, or the like), hopping-related information, an SRS resource type, a sequence ID, SRS spatial relation information, and the like.

The SRS spatial relation information (for example, an RRC information element "spatialRelationInfo") may indicate information on a spatial relation between a certain reference signal and an SRS. The certain reference signal may be at least one of a synchronization signal/broadcast channel (Synchronization Signal/Physical Broadcast Channel (SS/PBCH)) block, a channel state information reference signal (CSI-RS), or an SRS (for example, another SRS). The SS/PBCH block may be referred to as a synchronization signal block (SSB).

The SRS spatial relation information may include, as an index of the certain reference signal above, at least one of an SSB index, a CSI-RS resource ID, or an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), and the like corresponding to the certain reference signal above.

Regarding a certain SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam of the SSB or CSI-RS and a UE transmit beam of the SRS are the same.

Regarding a certain SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam of the reference SRS and a UE transmit beam of the target SRS are the same.

The UE may determine, based on a value of a certain field (for example, an SRS resource indicator (SRI) field) in DCI (for example, DCI format 0_1), a spatial relation for a PUSCH scheduled by the DCI. Specifically, the UE may use, for PUSCH transmission, spatial relation information (for example, an RRC information element "spatialRelationInfo") for an SRS resource determined based on the value of the certain field (for example, the SRI).

In Rel-15/16 NR, when codebook based transmission is used for a PUSCH, the UE may be configured with an SRS resource set including two SRS resources at maximum with codebook usage, by RRC, and may be indicated with one of the two SRS resources at maximum by DCI (one-bit SRI field). A transmit beam for the PUSCH is indicated by the SRI field.

The UE may judge a TPMI and the number of layers (transmission rank) for the PUSCH, based on a precoding information and number of layers field (also referred to hereinafter as a precoding information field). The UE may select, based on the TPMI, the number of layers, and the like above, a precoder from an uplink codebook for the same number of ports as the number of SRS ports indicated by a higher layer parameter "nrofSRS-Ports" configured for an SRS resource indicated by the SRI field above.

In Rel-15/16 NR, when non-codebook based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may compute a precoder for the SRS resource.

When a CSI-RS associated with the SRS resource (or SRS resource set to which the SRS resource belongs) (which may be referred to as an associated CSI-RS) is configured via a higher layer, a transmit beam for the PUSCH may be computed based on (measurement of) the configured associated CSI-RS. Otherwise, a transmit beam for the PUSCH may be indicated by an SRI.

Note that the UE may be configured with whether to use codebook based PUSCH transmission or non-codebook based PUSCH transmission, by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

(SRS)

In NR, a reference signal for measurement (Sounding Reference Signal (SRS)) is used for various purposes. The SRS of NR is used not only for uplink (UL) CSI measurement also used in existing LTE (LTE Rel. 8 to 14), but also for downlink (DL) CSI measurement, beam management, and the like.

A UE may be configured with one or a plurality of SRS resources. The SRS resource(s) may be specified by an SRS resource index (SRI).

Each SRS resource may include one or a plurality of SRS ports (may correspond to one or a plurality of SRS ports). For example, the number of ports for each SRS may be 1, 2, 4, or the like.

The UE may be configured with one or a plurality of SRS resource sets. One SRS resource set may be associated with a certain number of SRS resources. The UE may use a higher layer parameter in common for SRS resources included in one SRS resource set. Note that a resource set in the present disclosure may be interpreted as a set, a resource group, a group, or the like.

Information related to the SRS resources or the resource set may be configured to the UE by using higher layer signaling, physical layer signaling, or a combination of these.

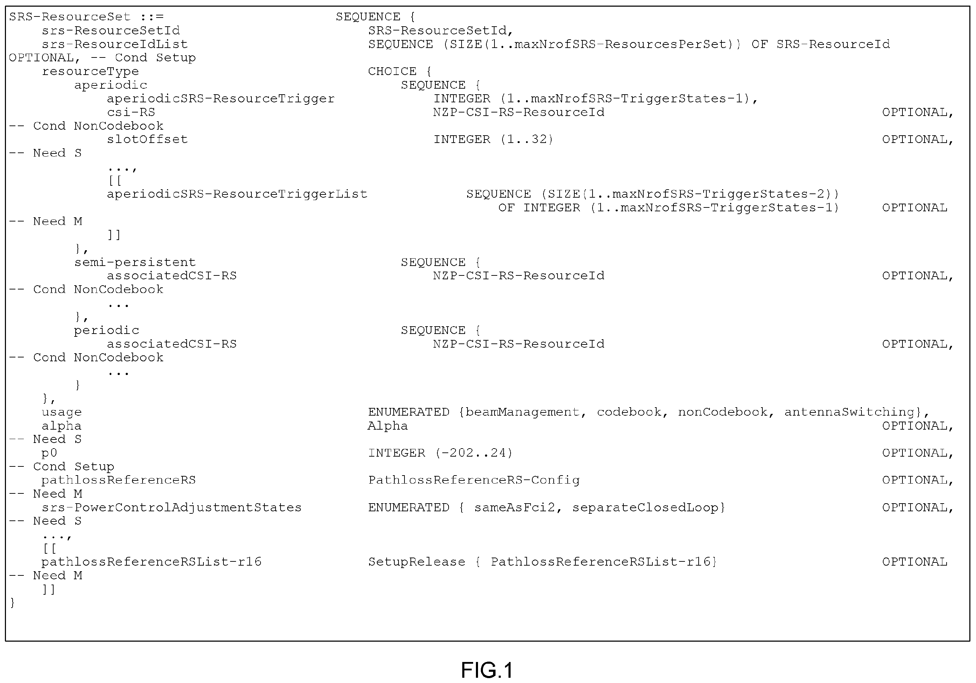

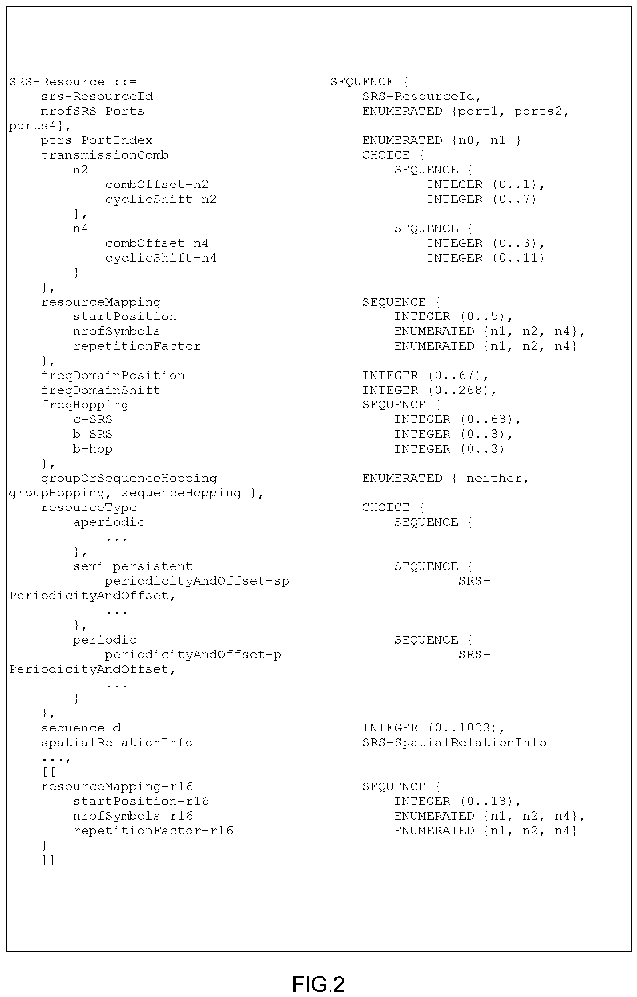

An SRS configuration information element (for example, an RRC information element "SRS-Config") may include an SRS resource set configuration information element (FIG. 1), an SRS resource configuration information element (FIG. 2), and the like.

The SRS resource set configuration information element (for example, an RRC parameter "SRS-ResourceSet") may include an SRS resource set ID (Identifier) (SRS-ResourceSetId), a list of SRS resource IDs (SRS-ResourceId) used in the resource set, an SRS resource type (resourceType), and information of SRS usage.

Here, the SRS resource type may indicate time domain behavior (same time domain behavior) for SRS resource configuration, and may indicate any one of a periodic SRS (P-SRS), a semi-persistent SRS (SP-SRS), or an aperiodic SRS (A-SRS, AP-SRS). Note that the UE may periodically (or, after activation, periodically) transmit the P-SRS and the SP-SRS. The UE may transmit the A-SRS, based on an SRS request of DCI.

The SRS usage (an RRC parameter "usage" or an L1 (Layer-1) parameter "SRS-SetUse") may be, for example, beam management (beamManagement), codebook (CB), non-codebook (NCB), antenna switching (antennaSwitcing), or the like. For example, an SRS with codebook or non-codebook usage may be used to determine a precoder for codebook-based or non-codebook-based uplink shared channel (Physical Uplink Shared Channel (PUSCH)) transmission based on an SRI.

For an SRS with beam management usage, it may be assumed that only one SRS resource can be transmitted for each SRS resource set in a certain time instant (given time instant). Note that, when a plurality of SRS resources corresponding to the same time domain behavior belong to different respective SRS resource sets in the same Bandwidth Part (BWP), these SRS resources may be transmitted simultaneously.

The SRS resource configuration information element (for example, an RRC parameter "SRS-Resource") may include an SRS resource ID (SRS-ResourceId), the number of SRS ports, an SRS port number, the number of transmission combs, SRS resource mapping (for example, a time and/or frequency resource position, a resource offset, a resource periodicity, the number of repetitions, the number of SRS symbols, an SRS bandwidth, or the like), hopping-related information, an SRS resource type, a sequence ID, spatial relation information, and the like.

Values of the number of transmission combs (transmissionComb) are {2, 4}. Values of the number $N_{ap}^{SRS}$ of SRS ports (nrofSRS-Ports) are {1, 2, 4}. Values of antenna port number $p_i$ are {1000, 1001, ...}. Values of the number $N_{symb}^{SRS}$ of consecutive SRS OFDM symbols (nrofSymbols) are {1, 2, 4}. For a starting position (startPosition) in the time domain, a symbol offset $l_{offset}$ counted from an end of a slot in a direction opposite to the time domain is {0, 1, ..., 5}, and the starting position is given by $l_0 = N_{symb}^{slot} - 1 - l_{offset}$.

Configuration of the number of transmission combs may include a comb offset and a cyclic shift (cyclic shift (CS) index, CS number).

SRSs from the UE with at least one of different comb offsets (subcarrier offsets) = {0, 1, ..., $K_{TC}$ - 1} or different CSs may be multiplexed with each other by using the same number of transmission combs, the same RB, and the same symbol.

For each slot, the UE may switch a Bandwidth Part (BWP) for transmitting an SRS or may switch an antenna. The UE may apply at least one of intra-slot hopping or inter-slot hopping to SRS transmission.

In an existing SRS, a frequency domain starting position $k_0^{p\_i}$ for $p_i$ (p_i) is given by the following equation.

$$k_0^{p\_i} = \bar{k}_0^{p\_i} + \Sigma_{b=0}^{B_{SRS}} K_{TC} M_{SC,b}^{SRS} n_b$$

Here, $\bar{k}$ represents a variable obtained by attaching an overline to k, and may also be referred to as k bar. $\bar{k}_0^{p\_i}$ may be based on comb offset $\bar{k}_{TC}$. $K_{TC}$ is the number of transmission combs. $M_{SC,b}^{SRS}$ is the number of subcarriers in SRS bandwidth $m_{SRS,b}$ [RB], the subcarriers being used for SRS transmission. $n_b$ is a constant.

(SRS Bandwidth Configuration)

In a Rel-16 specification, an SRS bandwidth is defined. $C_{SRS} \in \{0, ..., 63\}$ (a configuration index, a row index) and $B_{SRS} \in \{0, 1, 2, 3\}$ (the number of boundaries of band division) are configured by using higher layer signaling, and the SRS bandwidth is determined by using a table (association/mapping of an SRS-related parameter) defined in the specification.

An available bandwidth is divided into some parts by using $B_{SRS}$. The plurality of parts are used for SRS hopping. $C_{SRS}$ configures a set of SRS bands. $B_{SRS}$ selects one bandwidth among the configured set. This example shows a case where $C_{SRS}$ = 13. All candidate values for SRS bandwidth $m_{SRS,b}$ (the number of RBs) are multiples of 4. $B_{SRS}$ divides the available bandwidth into a plurality of parts. The greater $B_{SRS}$ is, the larger the number of frequency sections becomes (the smaller a size of a frequency section becomes).

Parameter $b_{hop} \in$ {0, 1, 2, 3} is configured for SRS frequency hopping. When $b_{hop} < B_{SRS}$, SRS frequency hopping is enabled. An SRS is transmitted by using an SRS band of a band (hopping band) given to the SRS frequency hopping.

In the band (hopping band) given to the SRS frequency hopping, the SRS including SRS band $m_{SRS,b}$ is transmitted. For example, when $C_{SRS}$ = 24, $b_{hop}$ = 0, $B_{SRS}$ = 2, and $N_{symb}^{SRS}$ = 4, $m_{SRS,b}$ is 24 RBs.

(SRS Antenna Switching)

In Rel-15 NR, antenna switching (which may be referred to as antenna port switching) can be configured as SRS usage, as described above. The SRS antenna switching may be used, for example, when CSI acquisition is performed by using an uplink SRS in a time division duplex (TDD) band.

For example, for a UE having a capability to have the number of antenna ports available for transmission less than the number of antenna ports available for reception, UL SRS measurement may be used to determine a DL precoder.

Note that the UE may report, to a network, UE capability information indicating an SRS transmission port switching pattern to be supported (for example, an RRC parameter "supportedSRS-TxPortSwitch"). This pattern is expressed in a form "txry" such as "t1r2" and "t2r4," and this may mean that SRS transmission can be performed by using x antenna ports of a total of y antennas (which may be expressed as xTyR). Here, y may correspond to all or a subset of reception antennas of the UE.

For example, for DL CSI acquisition, the UE with 2T4R (2 transmission ports, 4 reception ports) may include two SRS resources each including two ports and may be configured with an SRS resource set for antenna switching usage.

Note that a case where x and y of "txty" are the same value may be expressed as xT = xR (for example, 4T = 4R).

(Multi-Port SRS transmission)

Multi-port SRS transmission will be described. The UE performs multiplexing using a cyclic shift when performing SRS transmission with multi-port. The following equation (A1) represents cyclic shift $\alpha_i$ in antenna port $P_i$.

$$\alpha_i = 2\pi \frac{n_{SRS}^{CS,i}}{n_{SRS}^{CS,max}}, \text{ where:}$$

$$n_{SRS}^{CS,i} = \begin{cases} \left( n_{SRS}^{CS} + \frac{n_{SRS}^{CS,max} \left\lfloor \frac{p_i - 1000}{2} \right\rfloor}{N_{ap}^{SRS}/2} \right) \bmod n_{SRS}^{CS,max} \\ \qquad \text{if } N_{ap}^{SRS} = 4 \text{ and } n_{SRS}^{CS,max} = 6, \\ \left( n_{SRS}^{CS} + \frac{n_{SRS}^{CS,max}(p_i - 1000)}{N_{ap}^{SRS}} \right) \bmod n_{SRS}^{CS,max} \text{ otherwise} \end{cases}$$

$$(A1)$$

It is studied that this equation is used in Rel. 17. In this equation, a case where the number $N_{ap}^{SRS}$ of ports = 4 and where the maximum number $n_{SRS}^{CS,max}$ of cyclic shifts = 6 and a case other than the case (otherwise) are assumed to be case 1 and case 2, respectively. In case 1, the number $K_{TC}$ of transmission combs is 8.

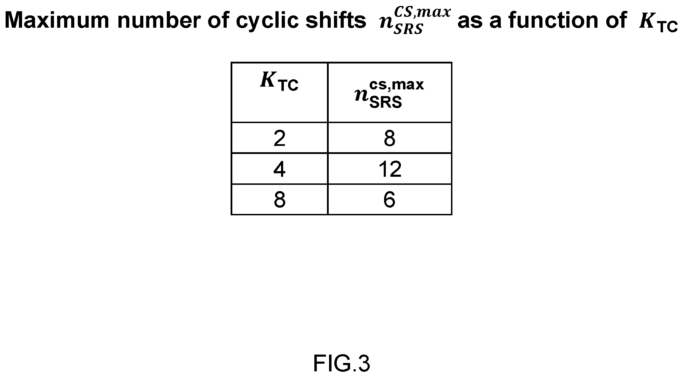

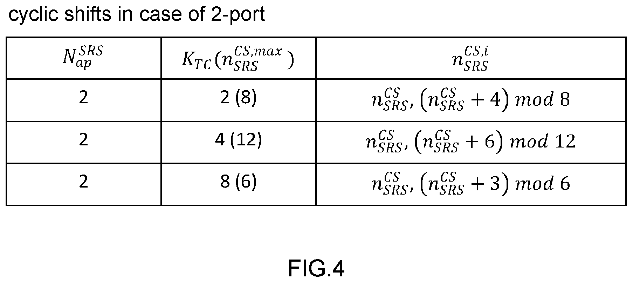

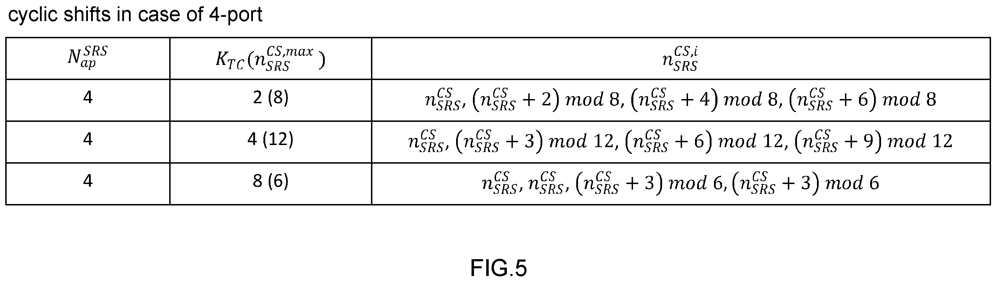

FIG. 3 is a table indicating a relationship between the number $K_{TC}$ of transmission combs and the maximum number $n_{SRS}^{CS,max}$ of SRS cyclic shifts in Rel. 16. Note that $n_{SRS}^{CS,max} \in$ {0, 1, ..., $n_{SRS}^{CS,max}$} and $N_{ap}^{SRS} \in$ {1, 2, 4}. FIG. 4 is a table indicating the number $K_{TC}$ of transmission combs and an SRS cyclic shift value $n_{SRS}^{CS, i}$ in a case where the number $N_{ap}^{SRS}$ of SRS ports is 2. FIG. 5 is a table indicating the number $K_{TC}$ of transmission combs and an SRS cyclic shift value $n_{SRS}^{CS, i}$ in a case where the number $N_{ap}^{SRS}$ of SRS ports is 4.

The following equation (A2) represents a resource starting position $k_0^{p\_i}$ in a frequency direction.

$$k_0^{p_i} = \bar{k}_0^{p_i} + n_{offset}^{FH} + n_{offset}^{RPFS}, \text{ where:}$$

$$\bar{k}_0^{p_i} = n_{shift} N_{SC}^{RB} + \left(k_{TC}^{p_i} + k_{offset}^{l'}\right) \bmod K_{TC}$$

$$k_{TC}^{p_i}$$

$$= \begin{cases} \left(\bar{k}_{TC} + K_{TC}/2\right) \bmod K_{TC} \\ \quad \text{if } N_{ap}^{SRS} = 4, \ p_i \in \{1001, 1003\} \text{ and } n_{SRS}^{CS,max} = 6, \\ \left(\bar{k}_{TC} + K_{TC}/2\right) \bmod K_{TC} \\ \text{if } N_{ap}^{SRS} = 4, \ p_i \in \{1001, 1003\} \text{ and } n_{SRS}^{CS} = \in \left\{n_{SRS}^{cs,max}/2, \ ..., n_{SRS}^{cs,max} - 1\right\}, \\ \bar{k}_{TC} \quad \text{otherwise} \end{cases}$$

$$k_{offset}^{l'} : \text{Positioning specific offset}$$

$$n_{offset}^{FH} = \sum_{b=0}^{B_{SRS}} m_{SRS,b} N_{SC}^{RB} n_b$$

$$n_{offset}^{RPFS} = N_{SC}^{RB} m_{SRS,B_{SRS}} \left(\left(k_F + k_{hop}\right) \bmod P_F\right)/P_F$$

(A2)

It is studied that this equation is used in Rel. 17. Note that for three cases of $k_{TC}^{p\_i}$, first case (A) corresponds to odd-numbered ports {1001, 1003} in a case where the number of transmission combs is 8. Second case B corresponds to odd-numbered ports {1001, 1003} having above-average cyclic shift values ($n_{ap}^{CS} = \in \{n_{SRS}^{CS,max}/2, ..., n_{SRS}^{CS,max}\}$) in a case where the number of transmission combs is 2, 4. Third case C is another case.

nshift is configured by a parameter "freqDomainShift" of the SRS resource configuration information element (FIG. 2). "combOffset" of the SRS resource configuration information element is used for $k_{TC}$. $K_{TC}$ is configured by "transmissionComb" of the SRS resource configuration information element. In other words, in case C, an RRC parameter value is directly applied.

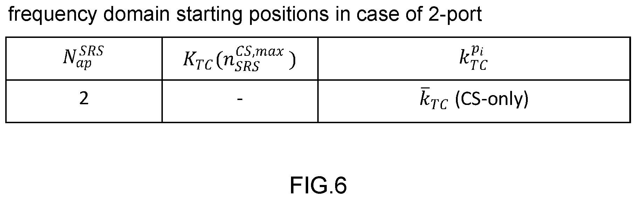

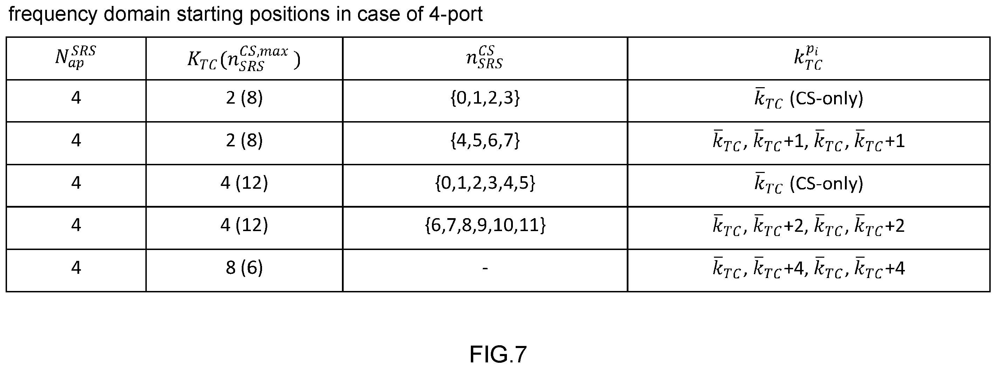

FIG. 6 is a diagram to show resource starting position $k_{TC}^{p\_i}$ in the frequency direction in a case where the number $N_{ap}^{SRS}$ of SRS ports is 2. In this example, case C is used. FIG. 7 is a diagram to show resource starting position $k_0^{p\_i}$ in the frequency direction in a case where the number $N_{ap}^{SRS}$ of SRS ports is 4. In this example, case C is applied to the first or third row (case of ($n_{SRS}^{CS}$) = {0, 1, 2, 3} or {0, 1, 2, 3, 4, 5}), case B is applied to the second or fourth row (case of ($n_{SRS}^{CS}$) = {4, 5, 6, 7} or {6, 7, 8, 9, 10, 11}), and case A is applied to the fifth row (case of $K_{TC}$ ($n_{SRS}^{CS,max}$) = 8 (6)).

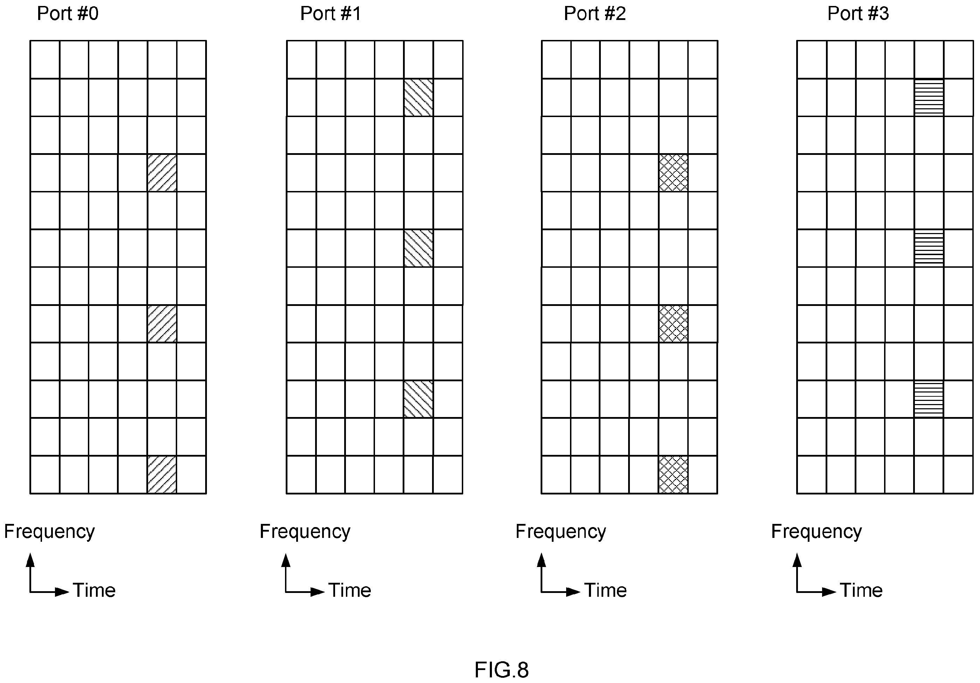

FIG. 8 shows SRS allocation to each port in a case where the number of transmission combs is 4. In this example, case C is used for ports #0 and #2, and case B is used for ports #1 and #3. A different cyclic shift is used in each port. Note that, in FIG. 8, the horizontal axis and the vertical axis are assumed to be time (symbol) and frequency (subcarrier), respectively. The same also applies to another diagram to show SRS allocation.

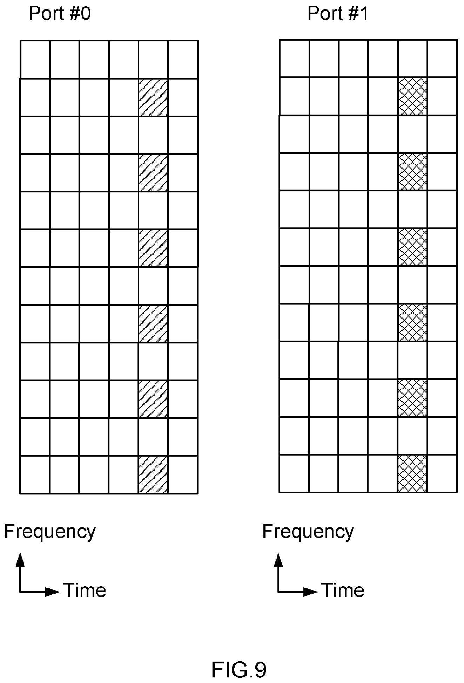

FIG. 9 shows SRS allocation to each port in a case where the number of transmission combs is 2. In this example, case C is used for ports #0 and #1. A different cyclic shift is used in each port.

(Base Sequence)

An SRS base sequence is given by the following equation (B1).

$$r^{(p_i)}(n, l') = r_{u,v}^{(\alpha_i, \delta)}(n)$$

$$0 \le n \le M_{sc,b}^{SRS}(n) - 1$$

$$l' \in \{0, 1, \dots, N_{symb}^{SRS} - 1\}$$

$$r_{u,v}^{(\alpha_i, \delta)}(n) = e^{j\alpha n} \bar{r}_{u,v}(n), \qquad 0 \le n \le M_{ZC}$$

(B1)

At least one of sequence hopping or group hopping for a low PAPR sequence may be configured by RRC. Base sequence $r_{u,v}(n)$ is divided into a plurality of groups. $\bar{r}$ represents a variable obtained by attaching an overline to $r$, and may also be referred to as r bar. $u = \{0, 1, \dots, 29\}$ represents a group number, and v represents a base sequence number in a group. Each group includes one base sequence (v = 0) of a length of $mM_{ZC} = N_{sc}^{RB}/2^\delta$, $1/2 \le m/2^\delta \le 5$ and two base sequences (v = 0, 1) of a length of $mM_{ZC} = N_{sc}^{RB}/2^\delta$, $6 \le m/2^\delta$. The definition of base sequence $r_{u,v}(0), \dots, r_{u,v}(M_{ZC} - 1)$ depends on sequence length $M_{ZC}$.

In the group hopping, the group number u is based on SRS sequence ID $n_{ID}^{SRS}$ and a symbol number in a radio frame for an SRS resource, and is given by the following equation (C1).

$$u = \left( f_{gh}\left( n_{s,f}^{\mu}, l' \right) + n_{ID}^{SRS} \right) \bmod 30$$

(C1)

The symbol number is based on slot number $n_{s,f}^{\mu}$ in the radio frame, the number $N_{symb}^{slot}$ of symbols in a slot, start symbol $l_0$ for the SRS resource, and SRS symbol number $l' \in \{0, 1, \dots, N_{symb}^{SRS} - 1\}$ in the SRS resource. A higher layer parameter "sequenceId" in SRS-Resource IE gives $n_{ID}^{SRS} \in \{0, 1, \dots, 1023\}$, or a higher layer parameter "sequenceId" in SRS-PosResource-r16 IE gives $n_{ID}^{SRS} \in \{0, 1, \dots, 65535\}$.

When groupOrSequenceHopping is equal to 'neither,' neither group hopping nor sequence hopping is used. In this case, the group number u and the sequence number v are given by the following equation (C2).

$$f_{gh}\left( n_{s,f}^{\mu}, l' \right) = 0$$

$$v = 0$$

(C2)

When groupOrSequenceHopping is equal to 'groupHopping,' group hopping is used and sequence hopping is not used. In this case, the group number u and the sequence number v are given by the following equation (C3).

$$f_{gh}\left( n_{s,f}^{\mu}, l' \right) = \left( \sum_{m=0}^{7} c\left( 8\left( n_{s,f}^{\mu} N_{symb}^{slot} + l_0 + l' \right) + m \right) \cdot 2^m \right) \bmod 30$$

$$v = 0$$

(C3)

Here, at a start of each radio frame, quasi-random sequence c(i) is initialized by $c_{init} = n_{ID}^{SRS}$.

When groupOrSequenceHopping is equal to 'sequenceHopping,' sequence hopping is used and group hopping is not used. In this case, the group number u and the sequence number v are given by the following equation (C4).

$$f_{gh}\left(n_{s,f}^{\mu}, l'\right) = 0$$

$$v = \begin{cases} c\left(n_{s,f}^{\mu} N_{symb}^{slot} + l_0 + l'\right) & M_{sc,b}^{SRS} \geq 6N_{sc}^{RB} \\ 0 & otherwise \end{cases}$$

(C4)

Here, at a start of each radio frame, quasi-random sequence c(i) is initialized by $c_{init} = n_{ID}^{SRS}$.

(Port Distribution Using TDM)

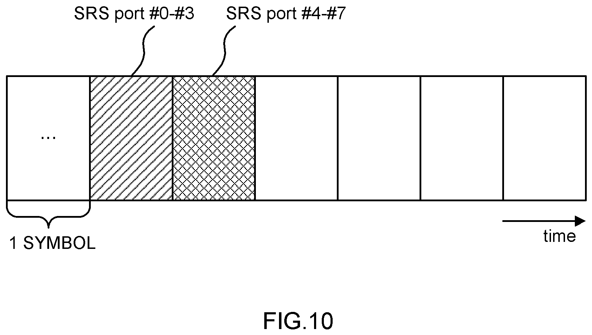

It is studied that when SRS usage is antenna switching/codebook, 8-port (8-layer) UL channel measurement with an SRS and mapping of different SRS ports to different OFDM symbols (that is, TDM) are supported (FIG. 10). It is also considered that all of eight ports are mapped to one OFDM symbol.

Application of port distribution using TDM (TDM mapping) has a smaller number of cyclic shifts occupied by one OFDM symbol, and thus has an effect of increasing robustness against latency. Also, power per port can be increased. Note, however, that there is a possibility that a restriction that the same frequency resource usage/transmission power is used in a plurality of OFDM symbols is applied.

For example, it is considered that as SRS resource configuration, allocation of four ports for each one OFDM symbol and 8-port SRS transmission using two or more OFDM symbols are configured (for example, FIG. 10).

A specification defines transmission power associated with SRS transmission occasion i corresponding to SRS transmission configured by SRS resource(s). The SRS transmission means SRS transmission in one or a plurality of OFDM symbols. The transmission power is equally distributed among antenna ports configured for an SRS (for example, configured by SRS resource configuration).

(Analysis)

For future radio communication systems (for example, 3GPP Rel. 18 or later versions), support of more than four layers (for example, eight layers) in UL transmission from a terminal (user terminal, User Equipment (UE)) is under study. However, various configurations and the like when UL transmission with more than four layers (for example, a PUSCH with more than four layers/SRS corresponding to the PUSCH (for example, SRS ports with more than four ports)) is supported is indefinite. Accordingly, appropriate UL transmission with more than four layers (for example, a PUSCH with more than four layers/SRS corresponding to the PUSCH) may fail.

Thus, the inventors of the present invention came up with the idea of a method for appropriately performing UL transmission with more than four layers (for example, a PUSCH with more than four layers/SRS corresponding to the PUSCH).

Embodiments according to the present disclosure will be described in detail with reference to the drawings as follows. The radio communication methods according to respective embodiments may each be employed individually, or may be employed in combination.

In the present disclosure, "A/B" and "at least one of A or B" may be interchangeably interpreted. In the present disclosure, "A/B/C" may mean "at least one of A, B, or C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

As an SRS in the present disclosure, at least one of a P-SRS, an SP-SRS, or an AP-SRS may be used. In the present disclosure, a P SRS and a P-SRS may be interchangeably interpreted. In the present disclosure, an SP SRS and an SP-SRS may be interchangeably interpreted. In the present disclosure, an AP SRS and an AP-SRS may be interchangeably interpreted. A resource set group and an SRS resource set group may be interchangeably interpreted.

In the present disclosure, xTyR being applied, "txry" being transmitted (reported) in UE capability information (for example, supportedSRS-TxPortSwitch), and xTyR being configured in higher layer signaling/physical layer signaling may be interchangeably interpreted. In the present disclosure, UL transmission with more than four layers may be applied. The processing of the present disclosure may be applied to a UE for which more than four layers are supported.

In the present disclosure, a port, an SRS port, a transmission port, an SRS transmission port, and an antenna port may be interchangeably interpreted. In the present disclosure, a reception port, an antenna port, and a UE antenna port may be interchangeably interpreted.

In the present disclosure, ports #0 to #7 may be interpreted as ports #1000 to #1007. In other words, 1000 may be added to respective port numbers of ports #0 to #7.

(Radio Communication Method)

<TDM With Eight Ports>

It is studied that, when eight ports are distributed by a TDM scheme, port subsets are cyclically mapped and that the same set of subcarriers is used in one subset. In TDM-based resource mapping using 8-port SRS resources of an SRS resource set with usage 'codebook' or 'antennaSwitching' and a TDM factor s, when s subsets of ports are mapped to $m \geq 2$ OFDM symbols in one slot in accordance with a pattern {{1, 2, ..., s}, ..., {1, 2, ..., s}} (overall, m/s groups of {1, 2, ..., s}), SRS resources in each of the m/s groups of {1, 2, ..., s} use the same set of subcarriers. When consecutive groups of {1, 2, ..., s} are configured as repetition, SRS transmission with the consecutive groups use the same set of subcarriers. This distribution may be applied to SRS resources using frequency hopping (FH)/resource block-level partial frequency sounding (RPFS) or may be applied to SRS resources not using FH/RPFS.

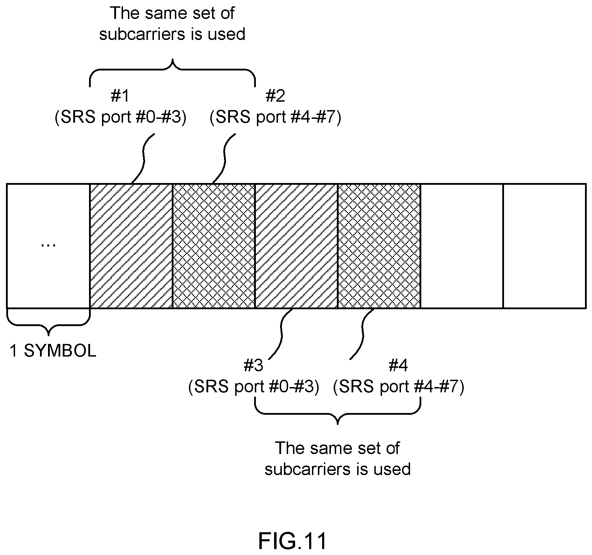

In an example of FIG. 11, SRSs with 8 ports are distributed to s=2 consecutive symbols for each 4 ports and are TDMed. The group is repeated m/s=2 times, thereby mapping the two groups to m=4 symbols in one slot.

In the present disclosure, one subset (port subset) may correspond to one symbol (OFDM symbol, SRS symbol), 8/s ports. In the present disclosure, one group may correspond to s symbols, s subsets, and 8 ports. In the present disclosure, all SRS symbols (Ns symbols) may correspond to m symbols, m/s groups.

<SRS Repetition and Frequency Hopping>

SRS repetition and intra-slot frequency hopping are determined based on some parameters below:

- Ns (the number of symbols) {n1, n2, n4, n8, n10, n12, n14}: Total number of SRS symbols in one slot
- R (repetition factor) {n1, n2, n4, n5, n6, n7, n8, n10, n12, n14}: Number of repetitions of SRS transmission

Ns and R may follow at least one of some examples below.

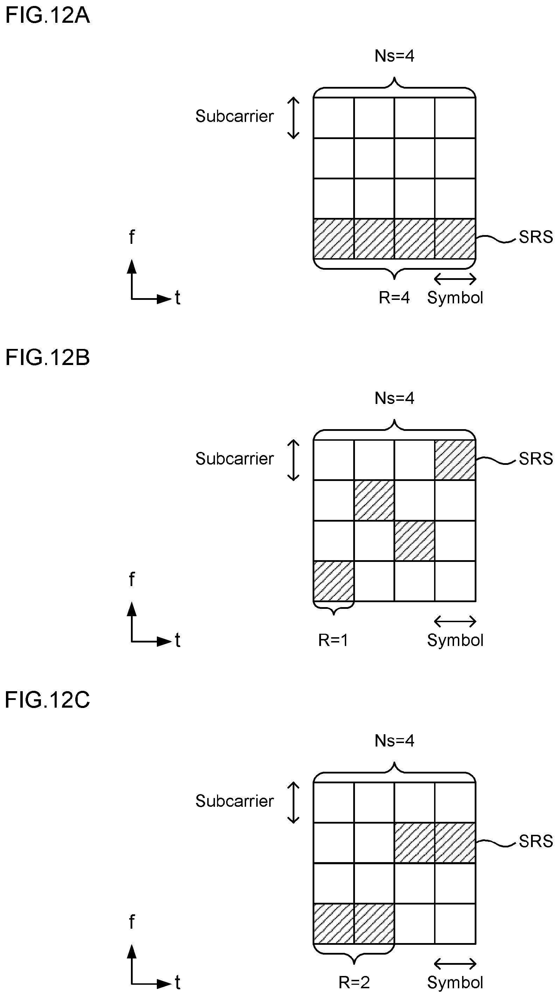

- Example 1: When R = Ns, all SRS symbols (Ns symbols) use the same set of subcarriers. In an example of FIG. 12A, Ns = 4 and R = 4.
- Example 2: When R = 1, different SRS symbols use different sets of subcarriers. In an example of FIG. 12B, Ns = 4 and R = 1.
- Example 3: When $R \geq 2$ and $Ns \geq 4$, R adjacent SRS symbols use the same set of subcarriers. In an example of FIG. 12C, Ns = 4 and R = 2.

<Analysis>

Studies have not been sufficiently made on a relationship between a plurality of configurations (parameters) below.

- The number R of repetitions
- The number Ns of SRS symbols

- The number s of port subsets (new parameter for TDMed 8-port SRS)

Studies have not been sufficiently made on a relationship between TDMed SRS ports and comb offset hopping. Whether the comb offset hopping is performed for each symbol or for each one cycle of port subsets is indefinite.

<UE Operation>

The UE may receive information (for example, configuration/indication) related to sounding reference signal (SRS) transmission using a plurality of ports greater than four. The UE may determine, based on the information, at least one of the number (for example, R) of repetitions of the SRS transmission, the number of symbols to which the plurality of ports are mapped (for example, the number s of port subsets), and the number of ports mapped to one symbol, among the plurality of ports (for example, the number of ports in one port subset, the number of ports/s).

The UE may receive information (for example, configuration/indication) related to sounding reference signal (SRS) transmission using a plurality of ports greater than four. The UE may control, based on the information, comb offset hopping in the SRS transmission.

When TDM port mapping for an SRS using more than four ports is configured, the UE may perform repetition transmission of an SRS in one symbol corresponding to one port subset R times, may perform repetition transmission of SRSs in s symbols corresponding to s port subsets R times, or may perform repetition transmission of SRSs in m symbols R times.

<Embodiment A1>

When TDM port mapping for an SRS using more than four ports is configured, a restriction (limitation) on an RRC parameter R (the number of repetitions for the SRS) may be applied. According to the present embodiment, occurrence of a mismatch between SRS repetition and a port subset can be avoided, and the same number of repetitions can be performed for all subsets.

- Option 1: The restriction may be at least one of some options below.

    -- Option 1-1: R can take existing candidate values. In other words, R can be 1, 2, 4, 5, 6, 7, 8, 10, 12, 14.
    -- Option 1-2: R can take values other than 1 among the existing candidate values. In other words, R can be 2, 4, 5, 6, 7, 8, 10, 12, 14.
    -- Option 1-3: R can take only even values among the existing candidate values. In other words, R can be 2, 4, 6, 8, 10, 12, 14.
    -- Option 1-4: R is Ns (the number of SRS symbols) or less.
    -- Option 1-5: R can take multiples of the number s of port subsets. For example, when s = 2, R can be the same set as that of option 1-3. For example, when s = 4, R can be 4, 8, 12.

- Option 2: The restriction may be applied by at least one of some options below.

    -- Option 2-1: An explicit RRC parameter
    -- Option 2-2: An RRC parameter for configuring an SRS using more than four ports
    -- Option 2-3: DL MAC CE indication
    -- Option 2-4: DCI indication The DCI may be DCI for triggering A-SRS transmission.

<Embodiment A2>

When TDM port mapping for an SRS using more than four ports is configured, at least one of the number s of port subsets or the number of ports in one port subset (that is, the number of ports/s) may be determined based on at least the number R of repetitions. According to the present embodiment, it is possible to suppress (minimize) overhead for configuration required for an 8-port SRS to be TDMed.

- Option 1: At least one of the number s of port subsets or the number of ports in one port subset (that is, the number of ports/s) may follow at least one of some options below.

    -- Option 1-1: The number s of port subsets is the same as R. In this case, a restriction on R may be applied. R may be a maximum number of port subsets or less. For R, at least one restriction among options 1-1 to 1-5 in Embodiment 1 may further be applied.

- Option 2: The number s of port subsets is R/X. Here, X may be configured by an RRC parameter. X may be selected from 2, 4, and 8. In this case, the value of R may be required to be an integer divisible by the selected value of X (may be a multiple of the selected value of X).

<Embodiment A3>

When TDM port mapping for an SRS using more than four ports is configured, at least one of the number s of port subsets or the number of ports in one port subset (that is, the number of ports/s) may be determined based on an explicit RRC parameter. The RRC parameter related to SRS transmission may indicate at least one of the number s of port subsets or the number of ports in one port subset (that is, the number of ports/s). According to the present embodiment, it is possible to flexibly configure at least one of the number s of port subsets or the number of ports in one port subset (that is, the number of ports/s).

<Embodiment A4>

When TDM port mapping for an SRS using more than four ports is configured, comb offset hopping based on specific granularity may be performed. According to the present embodiment, a UE/base station can appropriately perform comb offset hopping.

- Option 1: The specific granularity may be at least one of some options below.

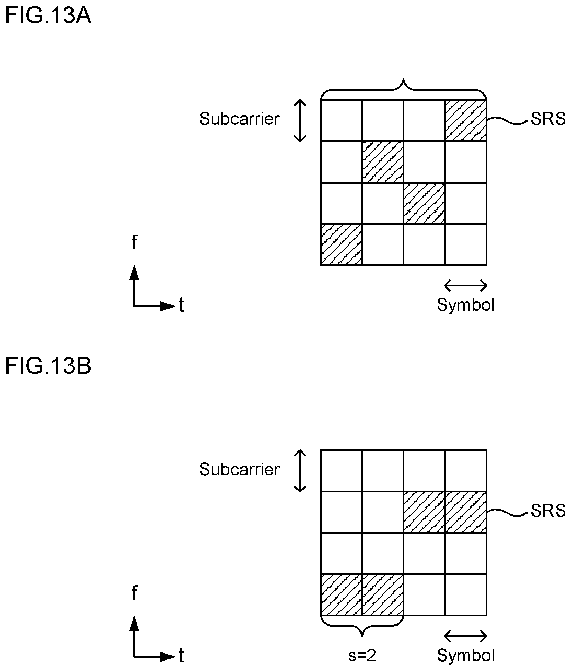

  -- Option 1-1: The comb offset hopping is performed for each OFDM symbol (for example, FIG. 13A).
  -- Option 1-2: The comb offset hopping is performed for each set of SRS symbols. The set of SRS symbols is a set of SRS symbols required for transmission of all SRS ports. The number of SRS symbols in the set may be equal to the number s of port subsets (for example, FIG. 13B).
  -- Option 1-3: The comb offset hopping is performed for each R symbols. R may be a repetition factor (for example, any one of FIG. 12A to FIG. 12C). Options 1 to 3 may be applied to an SRS using four or less ports.

- Option 2: The configurability of options 1-1 to 1-3 described above may follow at least one of some options below.

  -- Option 2-1: Only one of options 1-1 to 1-3 is supported.
  -- Option 2-2: All of options 1-1 to 1-3 are supported, and one of the plurality of options is configured by RRC.
  -- Option 2-3: All of options 1-1 to 1-3 are supported, a subset of the plurality of options is configured by RRC, and one option of the subset is indicated by a MAC CE/DCI.
  -- Option 2-4: Only a subset of options 1-1 to 1-3 is supported, and one option of the subset is configured by RRC.

<Embodiment A5>

When TDM port mapping for an SRS using more than four ports is configured, comb offset hopping may not be configured. In other words, a specification may define that a UE does not expect that TDM port mapping and comb offset hopping are configured simultaneously. According to the present embodiment, the UE can be appropriately configured with TDM port mapping or comb offset hopping.

<SRS for Non-Codebook Based PUSCH Transmission>

It is assumed that for non-codebook based PUSCH transmission, an SRS is transmitted before the PUSCH in order for a base station (for example, a gNB) to measure a UL channel state (for example, UL CSI).
In an SRS resource set (for example, usage=nonCodebook), parameters below may be applied/configured in accordance with a UE capability.

- A maximum number of SRS resources capable of being configured for simultaneous transmission in the same symbol (for example, maxNumberSimultaneousSRS-ResourceTx)
- A maximum number of SRS resources

Simultaneously transmitted SRSs may occupy the same symbol. In other words, the simultaneously transmitted SRSs (or SRSs capable of being simultaneously transmitted) may mean SRSs transmitted in the same symbol (or SRSs capable of being transmitted in the same symbol). Also, only one SRS port may correspond to/be supported for each SRS resource. Note that an SRS, an SRS resource, and an SRS port may be interchangeably interpreted.

The UE may receive an SRS configuration (for example, information related to an SRS resource set/SRS resource), and may control SRS transmission, based on the SRS configuration. The SRS configuration may indicate an SRS resource included in each SRS resource set.

<Analysis>

It is assumed that in Rel. 18 or later versions, UL PUSCH with up to 8 layers is supported for both a codebook based (CB-based) PUSCH and a non-codebook based (NCB-based) PUSCH.

It is assumed that the non-codebook base requires CSI measurement with an SRS (for example, one SRS port corresponds to each one SRS resource).

When SRS transmission/configuration in an existing system is used, it is assumed that for SRS transmission for a non-codebook based UL PUSCH, up to four ports are considered for simultaneous transmission even when the UE supports up to eight layers for UL PUSCH transmission. This means that a plurality of symbols (for example, two or more symbols) are used for a non-codebook based SRS, which may reduce UL resource efficiency.

Thus, the following embodiment describes a case where SRS resources capable of being simultaneously transmitted (or SRS resources capable of being transmitted in the same symbol) are determined based on expansion or a certain condition.

<Embodiment 1>

Embodiment 1 relates to an example of SRS transmission for non-codebook (for example, nonCodebook usage).

For SRS transmission not using a codebook (for example, nonCodebook usage), more than four resources (or four or more resources) may be supported for simultaneous transmission. In other words, for non-codebook based SRS transmission, simultaneous transmission of more than four resources may be supported.

Simultaneous transmission of more than four SRS resources is supported, thereby enabling, even when a non-codebook based PUSCH with more than four layers is applied, the number of symbols required for an SRS for the PUSCH to be reduced. Thus, UL resource utilization efficiency can be improved.

The maximum number of SRS resources capable of being simultaneously transmitted may be expanded (for example, expanded from that of the existing system). For example, at least one of options 1-1-1 to 1-1-2 below may be applied.

{Option 1-1-1}

The maximum number of resources capable of being simultaneously transmitted may be defined/configured as a fixed value. The fixed value may be, for example, a value greater than 4 (for example, 8). As a matter of course, the fixed value is not limited to a value greater than 4 (for example, 8), and may be another value.

{Option 1-1-2}

The maximum number of resources capable of being simultaneously transmitted may be a value determined based on a non-codebook based PUSCH (for example, X). For example, X may be a maximum number of layers for non-codebook based PUSCH transmission.

In this manner, a maximum number of SRS resources capable of being simultaneously transmitted is expanded to a value greater than 4 (for example, 8) or a maximum number of transmission layers for PUSCH transmission (for example, X), thereby enabling the number of symbols used for non-codebook based SRS transmission to be reduced. Thus, reduction in UL resource efficiency can be suppressed.

As the maximum number of SRS resources configured (or configurable) for simultaneous transmission, a certain value may be newly supported. For example, at least one of values described in options 1-2-1 to 1-2-3 below may be newly supported.

The certain value may correspond to/be applied as/be configured as RRC configuration (or a higher layer parameter)/UE capability signaling (for example, maxNumberSimultaneousSRS-ResourceTx) for a maximum number of SRS resources configurable for simultaneous transmission.

{Option 1-2-1}

All integer values (for example, a plurality of integer values) up to the fixed value/X described in option 1-1-1/option 1-1-2 may be configurable as the maximum number of SRS resources configured for simultaneous transmission.

For example, when the fixed value is 8, as the maximum number of SRS resources configured for simultaneous transmission, configuration of {1..8} may be supported.

Alternatively, when the maximum number of resources capable of being simultaneously transmitted is X corresponding to a maximum number of layers for non-codebook based PUSCH transmission, as the maximum number of SRS resources configured for simultaneous transmission, configuration of {1..X} may be supported.

In this manner, a plurality of integer values (for example, a plurality of integer values up to a fixed value/X greater than 4) are configurable as a maximum number of SRS resources configured for simultaneous transmission, thereby enabling a maximum number of simultaneously transmitted SRS resources to be flexibly configured.

{Option 1-2-2}

Only the fixed value/X described in option 1-1-1/option 1-1-2 (for example, a single/specific integer value) may be configurable as the maximum number of SRS resources configured for simultaneous transmission.

In this manner, a single/specific integer value (for example, only a plurality of integer values up to a fixed value/X greater than 4) is configured as a maximum number of SRS resources configured for simultaneous transmission, thereby enabling an increase in overhead for RRC configuration (or a higher layer parameter)/UE capability signaling to be suppressed.

{Option 1-2-3}

Some of a plurality of integer values up to the fixed value/X described in option 1-1-1/option 1-1-2 may be configurable as the maximum number of SRS resources configured for simultaneous transmission. The some of the plurality of integer values up to the fixed value/X may be odd-numbered values or even-numbered values among the plurality of integer values up to the fixed value/X.

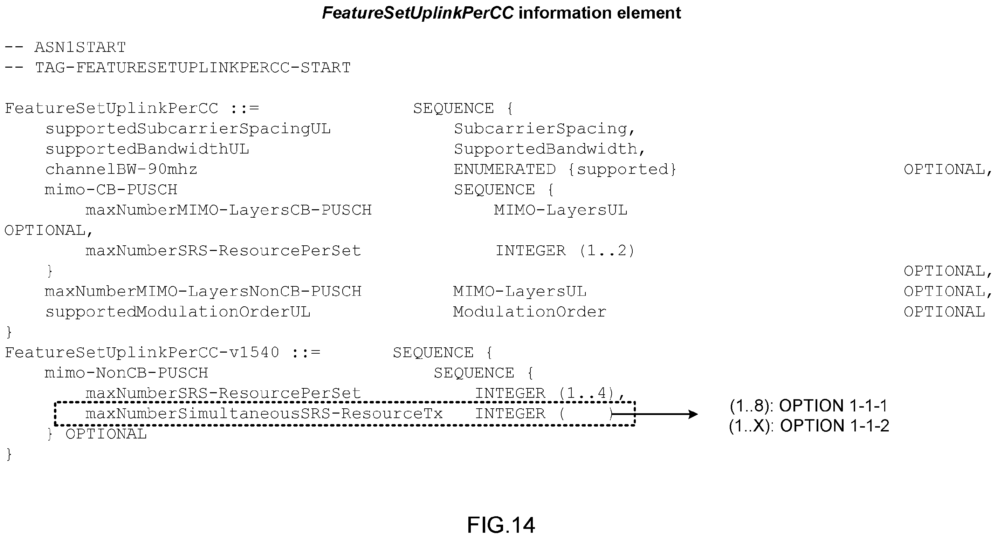

The UE may transmit UE capability signaling (for example, maxNumberSimultaneousSRS-ResourceTx) for a maximum number of SRS resources capable of being simultaneously transmitted (or receive an RRC parameter for the maximum number of SRS resources capable of being simultaneously transmitted), based on at least one of options 1-2-1 to 1-2-3 (see FIG. 14). FIG. 14 shows a case where as the maximum number of resources capable of being simultaneously transmitted, the fixed value (for example, option 1-1-1) or all the integer values up to the maximum number X of layers for PUSCH transmission (for example, option 1-1-2) are supported.

<Embodiment 2>

Embodiment 2 relates to another example of the SRS transmission for non-codebook (for example, nonCodebook usage). Embodiment 2 may be employed individually, or may be employed in combination with Embodiment 1.

A maximum number of SRS resources configured for simultaneous transmission may be determined/restricted based on a specific factor (for example, a particular factor(s)).

The specific factor may be at least one of options 2-1 to 2-2 below.

{Option 2-1}

The specific factor may be the number of symbols in a slot capable of being used by a UE for SRS transmission.

For example, when the UE can use, for SRS transmission, up to y (for example, y = 4) symbols in a slot, the UE may support two (for example, 8/y) ports or more than two ports for simultaneous SRS transmission. In this case, the UE may perform SRS transmission by using only some of the four symbols or may perform SRS transmission by using all of the four symbols.

{Option 2-2}

The specific factor may be a maximum number of layers for PUSCH transmission (for example, non-codebook based PUSCH transmission).

Option 2-1 and option 2-2 may be applied in combination.

For example, when the maximum number of layers for the PUSCH transmission is 6, and the UE can use, for SRS transmission, up to two symbols in a slot, the UE may support three or more ports for simultaneous SRS transmission. In this case, the UE may perform SRS transmission by using only some of the two symbols or may perform SRS transmission by using all of the two symbols.

Embodiment 1/Embodiment 2 may be employed when a certain condition is satisfied. The certain condition may be, for example, the number of layers supported by a UE. For example, only the UE that supports UL PUSCH transmission with more than four layers may support Embodiment 1/Embodiment 2.

<Variations>

In Embodiment 1/Embodiment 2, the expansion of the maximum number of SRS resources capable of being simultaneously transmitted has been described, but a maximum number of SRS resources per set may also be expanded. Integer values/range supported for the maximum number of SRS resources per set (for example, maxNumberSRS-ResourcePerSet) and integer values/range supported for the maximum number of SRS resources capable of being simultaneously transmitted (for example, maxNumberSimultaneousSRS-ResourceTx) may be commonly defined/configured.

Alternatively, integer values/range supported for the maximum number of SRS resources per set (for example, maxNumberSRS-ResourcePerSet) and integer values/range supported for the maximum number of SRS resources capable of being simultaneously transmitted (for example, maxNumberSimultaneousSRS-ResourceTx) may be separately defined/configured. For example, maxNumberSRS-ResourcePerSet may support (1..4), and maxNumberSimultaneousSRS-ResourceTx may support (1..8) or (1..X)).

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied to only one of some SRSs below.

- An SRS for a PUSCH (for example, non-codebook based) with more than four layers
- An SRS using more than four ports
- An SRS using more than four ports and using TDMed ports
- An SRS with specific time-domain operation (for example, AP/SP/P)
- An SRS with specific usage (for example, CB/NCB/antenna switching/beam management)

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:

- supporting of specific processing/operation/control/information for at least one of the embodiments above

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

An RRC parameter for enabling operation XXX in Rel. YY (for example, YY is 18 or greater) may be represented as XXX_rYY (XXX-rYY).

When the UE does not support at least one of the specific UE capabilities above or is not configured with the specific information, operation of Rel. 15/16/17 may be applied, for example.

(Supplementary Note)

Regarding one embodiment of the present disclosure, the following supplementary notes of the invention will be given.

{Supplementary Note 1}

A terminal including:

a control section that controls transmission of a non-codebook based uplink shared channel (PUSCH) using more than four layers and a sounding reference signal (SRS) for the PUSCH; and
a transmitting section that transmits the PUSCH and the SRS, wherein
a maximum number of SRS resources capable of being simultaneously transmitted is determined based on at least one of a fixed value greater than four, a maximum number of layers for the PUSCH, or a number of symbols used for the SRS transmission.

{Supplementary Note 2}

The terminal according to supplementary note 1, wherein as the maximum number of SRS resources capable of being simultaneously transmitted, a plurality of integer values including at least an integer value greater than four are supported.

{Supplementary Note 3}

The terminal according to supplementary note 1 or 2, wherein as the maximum number of SRS resources capable of being simultaneously transmitted, only a specific integer value greater than four is supported.

{Supplementary Note 4}

The terminal according to any one of supplementary notes 1 to 3, wherein the transmitting section transmits, as UE capability information, the maximum number of SRS resources capable of being simultaneously transmitted determined based on at least one of the fixed value greater than four, the maximum number of layers for the PUSCH, or the number of symbols used for the SRS transmission.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

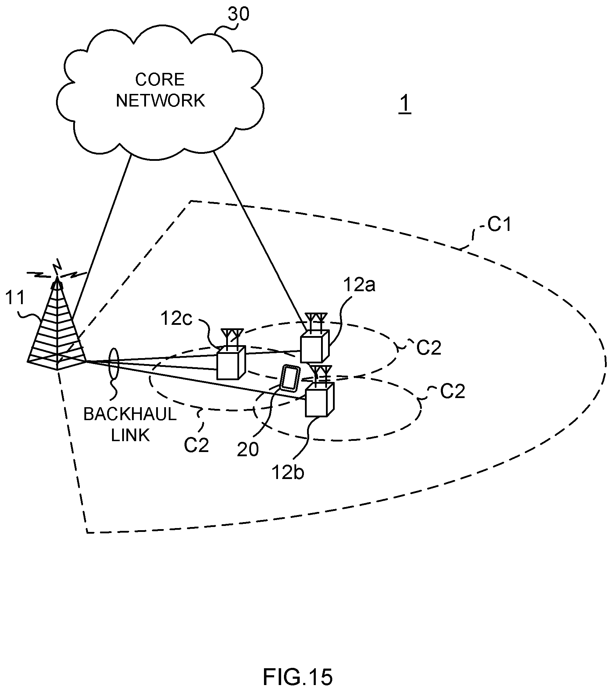

FIG. 15 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) or dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

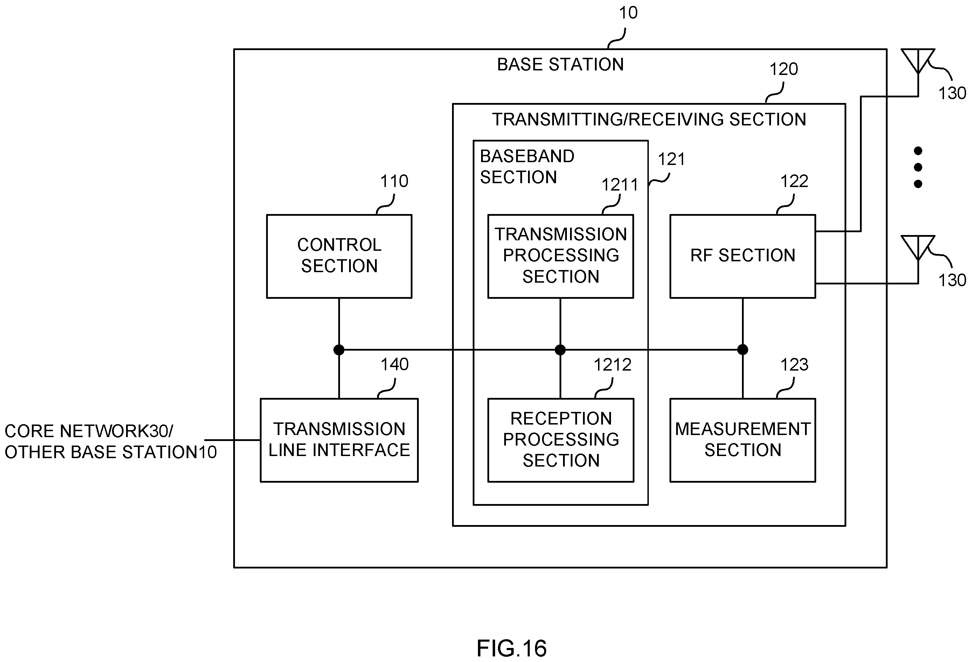

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, or the communication path interface 140.

The transmitting/receiving section 120 may transmit an SRS configuration (for example, information related to an SRS resource set/SRS resource). The transmitting/receiving section 120 may receive a PUSCH and an SRS. The transmitting/receiving section 120 may receive UE capability information related to a maximum number of SRS resources capable of being simultaneously transmitted. The control section 110 may indicate scheduling of a non-codebook based uplink shared channel (PUSCH) using more than four layers, and triggering or transmission of a sounding reference signal (SRS) for the PUSCH.

The maximum number of SRS resources capable of being simultaneously transmitted may be determined based on at least one of a fixed value greater than four, a maximum number of layers for the PUSCH, or a number of symbols used for the SRS transmission.

(User Terminal)

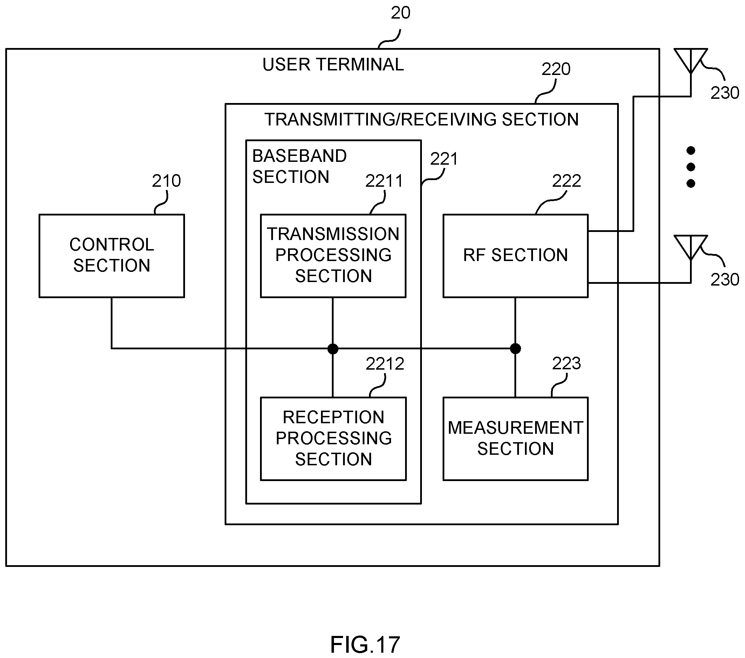

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.
Note that, the present example primarily shows functional blocks that pertain to characteristic parts of the present embodiment, and it is assumed that the user terminal 20 may include other functional blocks that are necessary for radio communication as well. Part of the processes of each section described below may be omitted.
The control section 210 controls the whole of the user terminal 20. The control section 210 can be constituted with a controller, a control circuit, or the like described based on general understanding of the technical field to which the present disclosure pertains.
The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.
The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.
The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.
The transmitting/receiving antennas 230 can be constituted with antennas, for example, an array antenna, or the like described based on general understanding of the technical field to which the present disclosure pertains.
The transmitting/receiving section 220 may receive the above-described downlink channel, synchronization signal, downlink reference signal, and so on. The transmitting/receiving section 220 may transmit the above-described uplink channel, uplink reference signal, and so on.
The transmitting/receiving section 220 may form at least one of a transmit beam or a receive beam by using digital beam forming (for example, precoding), analog beam forming (for example, phase rotation), and so on.
The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.
The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.
Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.
The transmitting/receiving section 220 (RF section 222) may perform modulation to a radio frequency band, filtering, amplification, and so on, on the baseband signal, and transmit the signal of the radio frequency band through the transmitting/receiving antennas 230.
On the other hand, the transmitting/receiving section 220 (RF section 222) may perform amplification, filtering, demodulation to a baseband signal, and so on, on the signal of the radio frequency band received by the transmitting/receiving antennas 230.
The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.
The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, or the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 or the transmitting/receiving antennas 230.

The transmitting/receiving section 220 may receive an SRS configuration (for example, information related to an SRS resource set/SRS resource). The transmitting/receiving section 220 may transmit a PUSCH and an SRS. The transmitting/receiving section 220 may transmit UE capability information related to a maximum number of SRS resources capable of being simultaneously transmitted.

The control section 210 may control transmission of a non-codebook based uplink shared channel (PUSCH) using more than four layers and a sounding reference signal (SRS) for the PUSCH.

The maximum number of SRS resources capable of being simultaneously transmitted may be determined based on at least one of a fixed value greater than four, a maximum number of layers for the PUSCH, or a number of symbols used for the SRS transmission.

As the maximum number of SRS resources capable of being simultaneously transmitted, a plurality of integer values including at least an integer value greater than four may be supported. As the maximum number of SRS resources capable of being simultaneously transmitted, only a specific integer value greater than four may be supported.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

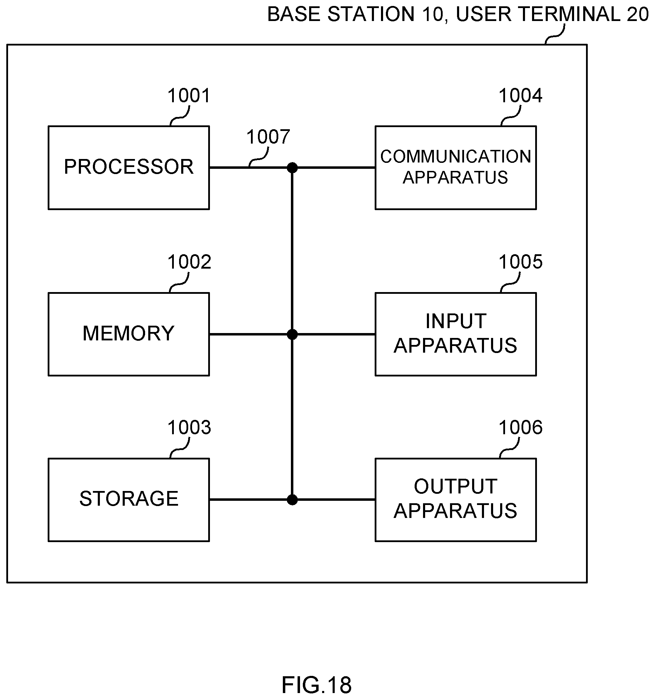

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

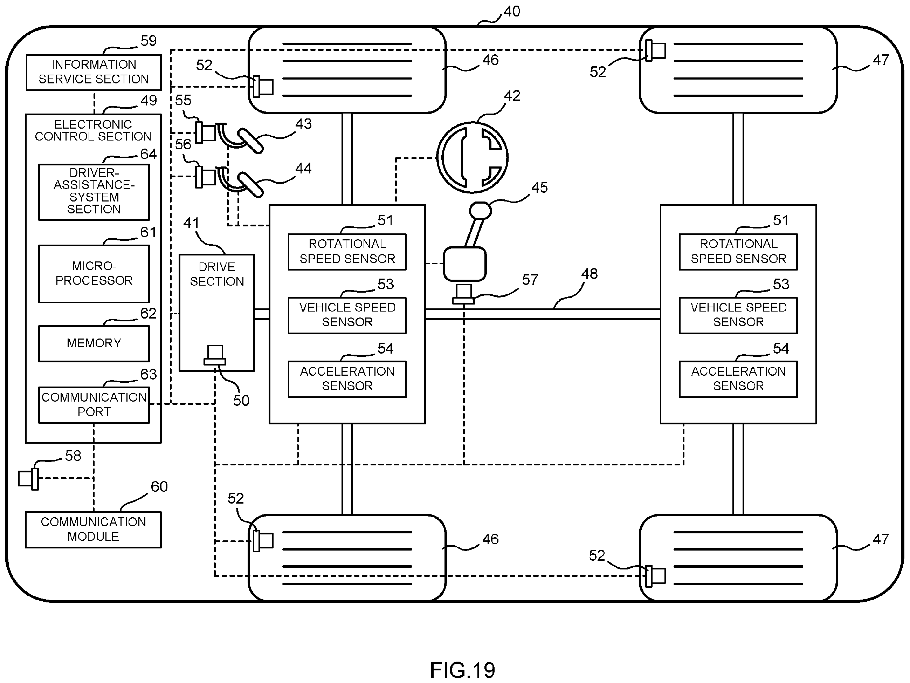

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..."

("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-134078, filed on August 21, 2023, the contents of which are incorporated herein by reference in their entirety.

**Claims**

1. A terminal comprising:

   a control section that controls transmission of a non-codebook based uplink shared channel (PUSCH) using more than four layers and a sounding reference signal (SRS) for the PUSCH; and

a transmitting section that transmits the PUSCH and the SRS, wherein
a maximum number of SRS resources capable of being simultaneously transmitted is determined based on at least one of a fixed value greater than four, a maximum number of layers for the PUSCH, or a number of symbols used for the SRS transmission.

2. The terminal according to claim 1, wherein
as the maximum number of SRS resources capable of being simultaneously transmitted, a plurality of integer values including at least an integer value greater than four are supported.

3. The terminal according to claim 1, wherein
as the maximum number of SRS resources capable of being simultaneously transmitted, only a specific integer value greater than four is supported.

4. The terminal according to claim 1, wherein
the transmitting section transmits, as UE capability information, the maximum number of SRS resources capable of being simultaneously transmitted determined based on at least one of the fixed value greater than four, the maximum number of layers for the PUSCH, or the number of symbols used for the SRS transmission.

5. A radio communication method for a terminal, the radio communication method comprising:

controlling transmission of a non-codebook based uplink shared channel (PUSCH) using more than four layers and a sounding reference signal (SRS) for the PUSCH; and
transmitting the PUSCH and the SRS, wherein
a maximum number of SRS resources capable of being simultaneously transmitted is determined based on at least one of a fixed value greater than four, a maximum number of layers for the PUSCH, or a number of symbols used for the SRS transmission.

6. A base station comprising:

a control section that indicates scheduling of a non-codebook based uplink shared channel (PUSCH) using more than four layers, and triggering or transmission of a sounding reference signal (SRS) for the PUSCH; and
a receiving section that receives the PUSCH and the SRS, wherein
a maximum number of SRS resources capable of being simultaneously transmitted is determined based on at least one of a fixed value greater than four, a maximum number of layers for the PUSCH, or a number of symbols used for the SRS transmission.

```
SRS-ResourceSet ::=                       SEQUENCE {
    srs-ResourceSetId                     SRS-ResourceSetId,
    srs-ResourceIdList                    SEQUENCE (SIZE(1..maxNrofSRS-ResourcesPerSet}) OF SRS-ResourceId
OPTIONAL, -- Cond Setup
    resourceType                          CHOICE {
        aperiodic                             SEQUENCE {
            aperiodicSRS-ResourceTrigger          INTEGER (1..maxNrofSRS-TriggerStates-1),
            csi-RS                                NZP-CSI-RS-ResourceId                         OPTIONAL,
-- Cond NonCodebook
            slotOffset                            INTEGER (1..32)                              OPTIONAL,
-- Need S
            ...,
            [[
            aperiodicSRS-ResourceTriggerList          SEQUENCE (SIZE(1..maxNrofSRS-TriggerStates-2))
                                                          OF INTEGER (1..maxNrofSRS-TriggerStates-1)     OPTIONAL
-- Need M
            ]]
        },
        semi-persistent                       SEQUENCE {
            associatedCSI-RS                      NZP-CSI-RS-ResourceId                         OPTIONAL,
-- Cond NonCodebook
            ...
        },
        periodic                              SEQUENCE {
            associatedCSI-RS                      NZP-CSI-RS-ResourceId                         OPTIONAL,
-- Cond NonCodebook
            ...
        }
    },
    usage                                 ENUMERATED {beamManagement, codebook, nonCodebook, antennaSwitching},
    alpha                                 Alpha                                        OPTIONAL,
-- Need S
    p0                                    INTEGER (-202..24)                           OPTIONAL,
-- Cond Setup
    pathlossReferenceRS                   PathlossReferenceRS-Config                   OPTIONAL,
-- Need M
    srs-PowerControlAdjustmentStates      ENUMERATED { sameAsFci2, separateClosedLoop}  OPTIONAL,
-- Need S
    ...,
    [[
    pathlossReferenceRSList-r16           SetupRelease { PathlossReferenceRSList-r16}   OPTIONAL
-- Need M
    ]]
}
```

FIG.1

```
SRS-Resource ::=                        SEQUENCE {
    srs-ResourceId                          SRS-ResourceId,
    nrofSRS-Ports                           ENUMERATED {port1, ports2,
ports4},
    ptrs-PortIndex                          ENUMERATED {n0, n1 }
    transmissionComb                        CHOICE {
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping                  ENUMERATED { neither,
groupHopping, sequenceHopping },
    resourceType                            CHOICE {
        aperiodic                               SEQUENCE {
            ...
        },
        semi-persistent                         SEQUENCE {
            periodicityAndOffset-sp                     SRS-
PeriodicityAndOffset,
            ...
        },
        periodic                                SEQUENCE {
            periodicityAndOffset-p                      SRS-
PeriodicityAndOffset,
            ...
        }
    },
    sequenceId                              INTEGER (0..1023),
    spatialRelationInfo                     SRS-SpatialRelationInfo
    ...,
    [[
    resourceMapping-r16                     SEQUENCE {
        startPosition-r16                       INTEGER (0..13),
        nrofSymbols-r16                         ENUMERATED {n1, n2, n4},
        repetitionFactor-r16                    ENUMERATED {n1, n2, n4}
    }
    ]]
```

FIG.2

**Maximum number of cyclic shifts $n_{SRS}^{CS,max}$ as a function of $K_{TC}$**

| $K_{TC}$ | $n_{SRS}^{cs,max}$ |
|:---:|:---:|
| 2 | 8 |
| 4 | 12 |
| 8 | 6 |

FIG.3

cyclic shifts in case of 2-port

| $N_{ap}^{SRS}$ | $K_{TC}\left(n_{SRS}^{CS,max}\right)$ | $n_{SRS}^{CS,i}$ |
|---|---|---|
| 2 | 2 (8) | $n_{SRS}^{CS}, \left(n_{SRS}^{CS} + 4\right) \bmod 8$ |
| 2 | 4 (12) | $n_{SRS}^{CS}, \left(n_{SRS}^{CS} + 6\right) \bmod 12$ |
| 2 | 8 (6) | $n_{SRS}^{CS}, \left(n_{SRS}^{CS} + 3\right) \bmod 6$ |

FIG.4

cyclic shifts in case of 4-port

| $N_{ap}^{SRS}$ | $K_{TC}(n_{SRS}^{CS,max})$ | $n_{SRS}^{CS,i}$ |
|---|---|---|
| 4 | 2 (8) | $n_{SRS}^{CS}, (n_{SRS}^{CS} + 2)\ mod\ 8, (n_{SRS}^{CS} + 4)\ mod\ 8, (n_{SRS}^{CS} + 6)\ mod\ 8$ |
| 4 | 4 (12) | $n_{SRS}^{CS}, (n_{SRS}^{CS} + 3)\ mod\ 12, (n_{SRS}^{CS} + 6)\ mod\ 12, (n_{SRS}^{CS} + 9)\ mod\ 12$ |
| 4 | 8 (6) | $n_{SRS}^{CS}, n_{SRS}^{CS}, (n_{SRS}^{CS} + 3)\ mod\ 6, (n_{SRS}^{CS} + 3)\ mod\ 6$ |

FIG.5

frequency domain starting positions in case of 2-port

| $N_{ap}^{SRS}$ | $K_{TC}(n_{SRS}^{CS,max})$ | $k_{TC}^{p_i}$ |
|:---:|:---:|:---:|
| 2 | - | $\bar{k}_{TC}$ (CS-only) |

<center>FIG.6</center>

frequency domain starting positions in case of 4-port

| $N_{ap}^{SRS}$ | $K_{TC}(n_{SRS}^{CS,max})$ | $n_{SRS}^{CS}$ | $k_{TC}^{p_i}$ |
|---|---|---|---|
| 4 | 2 (8) | {0,1,2,3} | $\bar{k}_{TC}$ (CS-only) |
| 4 | 2 (8) | {4,5,6,7} | $\bar{k}_{TC}, \bar{k}_{TC}+1, \bar{k}_{TC}, \bar{k}_{TC}+1$ |
| 4 | 4 (12) | {0,1,2,3,4,5} | $\bar{k}_{TC}$ (CS-only) |
| 4 | 4 (12) | {6,7,8,9,10,11} | $\bar{k}_{TC}, \bar{k}_{TC}+2, \bar{k}_{TC}, \bar{k}_{TC}+2$ |
| 4 | 8 (6) | - | $\bar{k}_{TC}, \bar{k}_{TC}+4, \bar{k}_{TC}, \bar{k}_{TC}+4$ |

FIG.7

EP 4 770 167 A1

FIG.8

EP 4 770 167 A1

Port #0                          Port #1

Frequency                        Frequency

Time                             Time

FIG.9

FIG.10

The same set of
subcarriers is used

#1
(SRS port #0-#3)

#2
(SRS port #4-#7)

...

1 SYMBOL

#3
(SRS port #0-#3)

#4
(SRS port #4-#7)

The same set of
subcarriers is used

FIG.11

FIG.12A

Ns=4

Subcarrier

f

t

SRS

R=4    Symbol

FIG.12B

Ns=4

Subcarrier

SRS

f

t

R=1    Symbol

FIG.12C

Ns=4

Subcarrier

SRS

f

t

R=2    Symbol

FIG.13A

FIG.13B

**_FeatureSetUplinkPerCC_ information element**

```
-- ASN1START
-- TAG-FEATURESETUPLINKPERCC-START

FeatureSetUplinkPerCC ::=                SEQUENCE {
    supportedSubcarrierSpacingUL             SubcarrierSpacing,
    supportedBandwidthUL                     SupportedBandwidth,
    channelBW-90mhz                          ENUMERATED {supported}                OPTIONAL,
    mimo-CB-PUSCH                            SEQUENCE {
        maxNumberMIMO-LayersCB-PUSCH             MIMO-LayersUL
OPTIONAL,
        maxNumberSRS-ResourcePerSet              INTEGER (1..2)
    }                                                                              OPTIONAL,
    maxNumberMIMO-LayersNonCB-PUSCH          MIMO-LayersUL                         OPTIONAL,
    supportedModulationOrderUL               ModulationOrder                       OPTIONAL
}
FeatureSetUplinkPerCC-v1540 ::=          SEQUENCE {
    mimo-NonCB-PUSCH                         SEQUENCE {
        maxNumberSRS-ResourcePerSet              INTEGER (1..4),
        maxNumberSimultaneousSRS-ResourceTx      INTEGER (      )
    } OPTIONAL
}
```

(1..8): OPTION 1-1-1
(1..X): OPTION 1-1-2

FIG.14

EP 4 770 167 A1

FIG.15

FIG.16

FIG.17

BASE STATION 10, USER TERMINAL 20

| 1001 | 1007 | 1004 |
|------|------|------|
| PROCESSOR | | COMMUNICATION APPARATUS |

| 1002 | | 1005 |
|------|------|------|
| MEMORY | | INPUT APPARATUS |

| 1003 | | 1006 |
|------|------|------|
| STORAGE | | OUTPUT APPARATUS |

FIG.18

FIG.19

## INTERNATIONAL SEARCH REPORT

| International application No. |
|---|
| **PCT/JP2024/029455** |

**A. CLASSIFICATION OF SUBJECT MATTER**

*H04W 16/28*(2009.01)i; *H04W 8/24*(2009.01)i; *H04W 72/21*(2023.01)i; *H04W 72/0446*(2023.01)i; *H04W 72/1268*(2023.01)i

FI: H04W16/28 130; H04W8/24; H04W72/0446; H04W72/1268; H04W72/21

According to International Patent Classification (IPC) or to both national classification and IPC

**B. FIELDS SEARCHED**

Minimum documentation searched (classification system followed by classification symbols)

H04W4/00-99/00; H04B7/24-7/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | SHARP, SRS enhancement targeting TDD CJT and 8 TX operation, 3GPP TSG RAN WG1 Meeting #112 R1-2300849, 17 February 2023, Internet <URL: https://www.3gpp.org/ftp/tsg_ran/WG1_RL1/TSGR1_112/Docs/R1-2300849.zip>  sections 1, 2.3 | 1, 3-6 |
| Y | | 2 |
| Y | NOKIA, NOKIA SHANGHAI BELL, Remaining issues on multi-antenna scheme, 3GPP TSG RAN WG1 Meeting #95 R1-1813485, 2 November 2018, Internet <URL: http://www.3gpp.org/ftp/tsg_ran/WG1_RL1/TSGR1_95/Docs/R1-1813485.zip>  section 3.1 | 2 |
| A | ERICSSON, Maintenance for multi-antenna scheme, 3GPP TSG RAN WG1 #94 Meeting R1-1809195, 11 August 2018, Internet <URL: http://www.3gpp.org/ftp/tsg_ran/WG1_RL1/TSGR1_94/Docs/R1-1809195.zip>  whole document | 1-6 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023134078 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010